# EUROPEAN PATENT SPECIFICATION

(11) **EP 4 443 556 B1**
(45) Date of publication and mention of the grant of the patent: **25.11.2026**
(21) Application number: 24181932.5
(22) Date of filing: 16.02.2007
(51) Int. Cl.: H01M 4/36

(54) **LITHIUM SECONDARY BATTERY WITH ENHANCED HEAT-RESISTANCE**
LITHIUMSEKUNDÄRBATTERIE MIT ERHÖHTER WÄRMEBESTÄNDIGKEIT
BATTERIE SECONDAIRE AU LITHIUM À RÉSISTANCE THERMIQUE AMÉLIORÉE

(30) Priority: 16.02.2006 KR 20060015126
(43) Date of publication of application: 09.10.2024
(62) Document number(s) of the earlier application(s) in accordance with Art. 76 EPC: 18194488.5 / 3 460 877; 07708999.3 / 1 994 586
(73) Proprietor: LG Energy Solution, Ltd., Seoul 07335 (KR)
(72) Inventor: KIM, Seok-Koo, 305-308 Daejeon (KR); JANG, Hyun-Min, 305-380 Daejeon (KR); LEE, Sang-Young, 305-761 Daejeon (KR); HONG, Jang-Hyuk, 305-340 Daejeon (KR)
(74) Representative: Hoffmann Eitle

(56) References cited:
- EP-A2- 1 416 552
- JP-A- 2005 038 793
- US-A1- 2003 072 996
- US-A1- 2003 104 273
- US-B1- 6 201 071

## Description

### Technical Field

The present invention relates to an electrode comprising a heat-absorbing porous coating layer that spontaneously absorbs or consumes heat generated inside an electrochemical device, a separator using heat-absorbing inorganic particles as a component for forming or coating the separator, and an electrochemical device using the electrode and/or the separator and having excellent thermal stability.

### Background Art

Recently, there is increasing interest in energy storage technology. Batteries have been widely used as energy sources in portable phones, camcorders, notebook computers, PCs and electric cars, resulting in intensive research and development into them. In this regard, electrochemical devices are subjects of great interest. Particularly, development of rechargeable secondary batteries has been the focus of attention. More recently, research and development into an electrode and a battery having a novel design have been conducted in order to improve capacity density and specific energy thereof.

Among the currently used secondary batteries, lithium secondary batteries, developed in early 1990's, have drive voltage and energy density higher than those of conventional batteries using aqueous electrolytes (such as Ni-MH batteries, Ni-Cd batteries and H₂SO₄-Pb batteries), and thus they are spotlighted in the field of secondary batteries. However, lithium secondary batteries have problems related to the safety, caused by ignition and explosion due to the use of organic electrolytes, and are manufactured through a complicated process.

Evaluation of and security in safety of batteries are very important matters to be considered. Particularly, users should be protected from being injured by malfunctioning of batteries. Therefore, safety of batteries is strictly restricted in terms of ignition and combustion in batteries by safety standards. Many attempts have been made to solve the problem related to the safety of a battery.

More fundamentally, currently available lithium ion batteries and lithium ion polymer batteries use polyolefin-based separators in order to prevent short circuit between a cathode and an anode. However, because such polyolefin-based separators use a polymer component having a melting point of 200°C or less and are subjected to a stretching step for controlling their pore sizes and porosities so as to be used as separators, they have a disadvantage in that they show high heat shrinking property upon exposure to high temperature. In other words, such separators can be shrunk or molten when the temperature of a battery increases due to internal and/or external factors. Therefore, there is a great possibility of a short-circuit between a cathode and an anode that are in direct contact with each other due to shrinking or melting of separators, resulting in accidents such as ignition and explosion of a battery caused by rapid emission of electric energy. Therefore, it is necessary to develop a separator that causes no heat shrinking at high temperature.

To solve the above problems related with polyolefin-based separators, many attempts are made to develop an electrolyte using an inorganic material capable of substituting for a conventional separator.

US Patent No. 6,432,586 discloses a polyolefin-based separator coated with an inorganic layer such as calcium carbonate, silica, etc. However, since the composite film still uses a polyolefin-based separator, it cannot provide a significant improvement in the safety of a battery, particularly in terms of the prevention of heat shrinking at high temperature.

Additionally, Creavis Co. (Germany) have developed an organic/inorganic composite separator comprising a non-woven polyester support coated with silica (SiO₂) or alumina (Al₂O₃). However, in the case of the above separator, the non-woven polyester support cannot provide excellent mechanical and physical properties by nature, and the chemical structure of polyester is liable to electrochemical reactions. Thus, it is thought that the above separator shows many problems in practical use.

Accordingly, there is an imminent need for developing a separator that can improve the quality and safety of an electrochemical device, or a composite electrolyte that also serves as such a separator.

EP 1 416 552 A2 relates to a battery separator for a lithium-ion secondary battery comprising a microporous membrane made of a thermoplastic and having thickness of 25 um or less. and an adjuvant mixed into the membrane or coated thereon. The adjuvant is a material adapted to reduce or eliminate energy concentrations around the separator.

US 2003/0072996 A1 describes a separator for a lithium secondary battery, which comprises a porous film including a polyolefin resin; and a coating solution coated on the porous film and containing a non-flammable compound and an adhesive resin for fixing the nonflammable compound.

US 2003/0104273 A1 describes an electrochemical element, wherein a multi-component composite film comprising a) polymer support layer film and b) a porous gellable polymer layer which is formed on either or both sides of the support layer film of a), wherein the support layer film of a) and the gellable polymer layer of b) are unified with each other without an interface between them.

US 6,201,071 B1 relates to a solid polymer electrolyte containing a polyether copolymer comprising certain repeating units (A), (B) and (C), an electrolyte salt and a plasticizer.

JP 2005-038793 A relates to a separator for nonaqueous electrolytic solution secondary battery with a multilayer structure having a first layer 1 containing a thermoplastic resin and a second layer 2 containing a thermosetting resin. The second layer 2 may be interposed by a third layer 3 containing a thermoplastic resin and the first layer 1.

### Brief Description of the Drawings

The foregoing and other objects, features and advantages of the present invention will become more apparent from the following detailed description when taken in conjunction with the accompanying drawings in which:
FIG. 1 is a graph showing the endothermic reaction of heat-absorbing particles (Al(OH)₃) used according to the present invention;
FIG. 2 is a photographic view of the section of an electrode comprising a heat-absorbing organic/inorganic composite porous coating layer according to the present invention, taken by SEM (scanning electron microscopy), the electrode including a collector (Al foil), an electrode active material layer formed on the collector and a heat-absorbing organic/inorganic composite porous coating layer formed on the electrode active material layer, stacked successively;
FIG. 3 is a photographic view of the surface of a heat-absorbing organic/inorganic composite porous coating layer formed on the surface of a preliminarily formed electrode, taken by SEM;
FIG. 4 is a schematic view of the section of an organic/inorganic composite porous separator according to the present invention;
FIG. 5 is a photographic view showing the surface of a porous separator comprising heat-absorbing inorganic particles introduced as a component forming the coating layer, taken by SEM;
FIG. 6 is a graph showing variations in voltage and temperature of a lithium secondary battery obtained by using the polyolefin-based separator according to Comparative Example 1, after causing an artificial internal short circuit (nail penetration) in the battery;
FIG. 7 is a graph showing variations in voltage and temperature of a lithium secondary battery obtained by using a composite separator comprising non-heat absorbing inorganic particles introduced thereto according to Comparative Example 2, after causing an artificial internal short circuit (nail penetration) in the battery;
FIG. 8 is a graph showing variations in voltage and temperature of a lithium secondary battery obtained by using an organic/inorganic composite porous separator comprising heat absorbing inorganic particles introduced thereto according to Example 1, after causing an artificial internal short circuit (nail penetration) in the battery;
FIG. 9 is a photographic view showing the organic/inorganic composite porous separator and a currently used polyolefin-based separator after storing them at room temperature (a) and 150°C for 1 hour (b), respectively.

### Disclosure

### Technical Problem

The inventors of the present invention have found that when conventional inorganic particles are used as a component for forming or coating a separator, it is not possible to fundamentally solve the problem of heat energy generated rapidly upon an internal short circuit between a cathode and an anode caused by external or internal impacts, resulting in dangerous accidents such as ignition or explosion with time or under the application of a secondary impact, even though no heat shrinking occurs even under high temperature conditions in an electrochemical device.

Considering this, according to the present invention, heat-absorbing inorganic particles that absorb or consume heat generated rapidly inside an electrochemical device are used as a component for forming or coating a separator.

### Technical solution

The present invention provides a separator comprising heat-absorbing particles that absorb heat energy generated at a temperature (T) higher than a normal drive temperature of an electrochemical device to be pyrolyzed, or consume such heat energy, as a component for forming or coating the separator. Specifically, the separator for a lithium secondary battery of the present invention comprises a porous substrate and an organic/inorganic composite porous coating layer on the surface, in the pore, or on the surface and in the pore of the substrate,
wherein the organic/inorganic composite porous coating layer comprises:
heat-absorbing inorganic particles,
a binder polymer, and
inorganic particles having a dielectric constant of 5 or more, which include at least one selected from the group consisting of SrTiO₃, SnO₂, CeO₂, MgO, NiO, ZnO, Y₂O₃, ZrO₂, Al₂O₃, TiO₂, and BaTiO₃,
wherein the heat-absorbing inorganic particle is at least one particle selected from the group consisting of antimony trioxide (Sb₂O₃), antimony tetraoxide (Sb₂O₄), antimony pentaoxide (Sb₂O₅), aluminum hydroxide (Al(OH)₃), magnesium hydroxide (Mg(OH)₂), H₃BO₃, HBO₂, ZnSnO₄, ZnSnO₃, and ZnSn(OH)₆, and
the binder polymer includes at least one selected from the group consisting of polyvinylidene fluoride-co-hexafluoropropylene, polyvinylidene fluoride-co-trichloroethylene, polymethylmethacrylate, polyacrylonitrile, polyvinyl pyrrolidone, polyvinyl acetate, polyethylene-co-vinyl acetate, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxymethyl cellulose, acrylonitrile-styrene-butadiene copolymer, , polyacarylonitrile-co-styrene, gelatine, and polyvinylidene fluoride.

There is also provided an electrochemical device, preferably a lithium secondary battery, comprising the above separator.

Hereinafter, the present invention will be explained in more detail.

The present invention is characterized by using heat-absorbing inorganic particles as a component for forming or coating a separator that serves to prevent a cathode and an anode from being in direct contact with each other and to provide a pathway through which lithium ions pass.

Herein, the separator according to the present invention comprises a porous substrate and an organic/composite porous coating layer formed on the porous substrate, the coating layer including inorganic particles and a binder polymer.

The heat-absorbing inorganic particles are those that can absorb or consume heat as soon as it is generated inside an electrochemical device, preferably a battery, and cause spontaneous pyrolysis or produce a new product by using the heat energy absorbed thereby.

The heat-absorbing inorganic particles introduced into the separator inhibit generation of an internal short circuit by preventing a cathode and an anode from being in direct contact with each other. Contrary to conventional non-heat absorbing inorganic particles, the heat-absorbing inorganic particles can inhibit rapid heat emission, even when a thermal runaway phenomenon or internal short circuit occurs due to external or internal factors, and thus can fundamentally prevent ignition and explosion of a battery. Additionally, since the inorganic particles have heat resistance, no heat shrinking occurs at high temperature contrary to a conventional polyolefin-based separator (m.p.: 120~140°C).

Further, because the heat-absorbing inorganic particles are used as a component not for forming an electrode, in which electrochemical reactions occur, but for forming and/or coating a separator, there is no drop in capacity of a battery caused by the use of such inorganic particles as a material for forming an electrode.

### <Heat-Absorbing Inorganic Particles>

There are no particular limitations in composition, shape, content, etc. of the heat-absorbing inorganic particles used as a component for forming and/or coating a separator, as long as the particles can absorb or consume heat generated abnormally inside an electrochemical device.

Preferably, even if the heat-absorbing inorganic particles are pyrolyzed, they are decomposed into at least one material having apparent physical properties (including particle diameter or shape) similar to those of the original heat-absorbing inorganic particles.

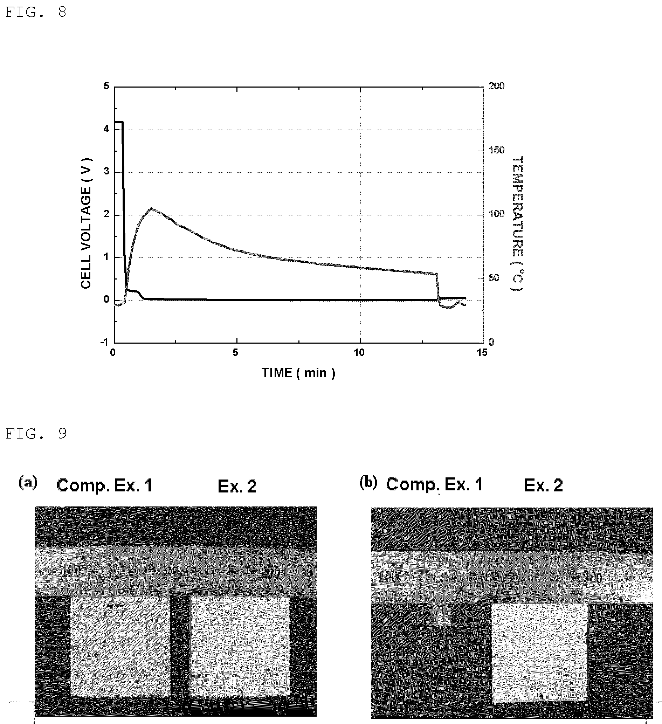

The heat-absorbing inorganic particles absorb heat energy preferably at a temperature (T) higher than a normal driving temperature of an electrochemical device, wherein the normal driving temperature is at most about 90°C. For example, in the case of an internal short circuit, a rapid local heat emission occurs at a temperature of 400~500°C, resulting in shrinking of a separator. At this time, the separator comprising heat-absorbing inorganic particles introduced thereto inhibits such rapid local heat emission, and thus imparts improved safety to an electrochemical device. In fact, it could be seen from the experimental example performed by the inventors of the present invention that when an internal short circuit occurs in a battery, the separator comprising heat-absorbing particles according to the present invention prevents the battery from being heated to a temperature of 100°C or higher, and thus ensures excellent thermal safety of the battery (see FIG. 8).

According to the present invention, the heat-absorbing inorganic particle is at least one particle selected from the group consisting of antimony trioxide (Sb₂O₃), antimony tetraoxide (Sb₂O₄), antimony pentaoxide (Sb₂O₅), aluminum hydroxide (Al(OH)₃), magnesium hydroxide (Mg(OH)₂), H₃BO₃, HBO₂, ZnSnO₄, ZnSnO₃, and ZnSn(OH)₆.

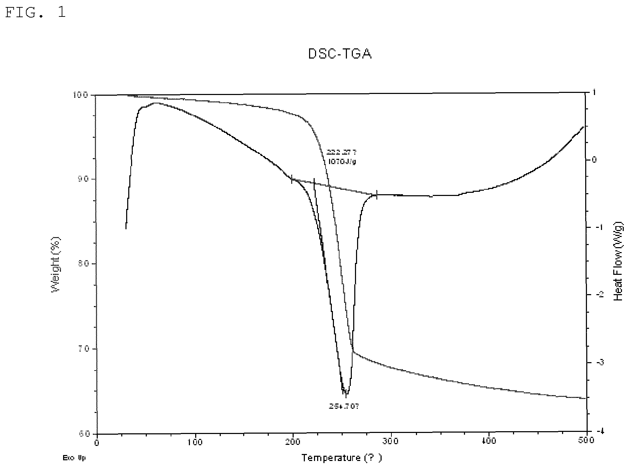

Aluminum hydroxide, which is a kind of metal hydroxide, is decomposed into Al₂O₃ and water (H₂O) by absorbing heat at a temperature of 200°C or higher. At this time, aluminum hydroxide absorbs heat energy of about 1000 J/g (see the following Reaction Scheme 1 and FIG. 1). Further, magnesium hydroxide also shows heat-absorbing property with heat energy absorption of about 1300 J/g (see the following Reaction Scheme 2). Therefore, when heat energy accumulated in the inorganic particles corresponds to the above-mentioned heat energy values or when heat emission occurs to a level corresponding to the above-mentioned heat energy values, endothermic reactions occur immediately so as to improve the safety of an electrochemical device.

[Reaction Scheme 1] 2Al(OH)₃ → Al₂O₃ + 3H₂O (200°C or higher) △H = -1051J/g

[Reaction Scheme 2] Mg(OH)₂ → MgO + H₂O (340°C or higher) △H = - 1316J/g

In addition, as shown in the following Reaction Schemes 3 and 4, boron compounds are pyrolyzed at a temperature of 130°C or higher and swelled in H₂O, so that they exist as molten compounds having flame resistance.

[Reaction Scheme 3] 2H₃BO₃ → 2HBO₂ + 2H₂O (130~200°C)

[Reaction Scheme 4] 2HBO₂ → B₂O₃ + H₂O (260~270°C)

Also, antimony-containing compounds are pyrolyzed and absorb the heat generated inside an electrochemical device, thereby improving the safety of an electrochemical device.

Besides the above-mentioned inorganic particles, other compounds that absorb the heat generated in an electrochemical device to be pyrolyzed or to produce new compounds. Additionally, inorganic flame resistant materials or organic flame resistant materials known to those skilled in the art may be used in combination with the heat-absorbing inorganic particles. Particularly, a combination of the heat-absorbing inorganic particles with an organic flame resistant material, such as a halide, further improves the safety of an electrochemical device.

The heat-absorbing inorganic particles according to the present invention can serve not only to form pores by the interstitial volumes among the interconnected inorganic particles but also to maintain the physical shape of a separator as a kind of spacer.

According to the present invention, inorganic particles having a high dielectric constant and/or low density are used together with the heat-absorbing inorganic particles. When the inorganic particles have a high dielectric constant, they can increase the dissociation degree of lithium ions in a liquid electrolyte. The inorganic particles used in the present invention have a dielectric constant of 5 or more, and are selected from the group consisting of SrTiO₃, SnO₂, CeO₂, MgO, NiO, ZnO, Y₂O₃, ZrO₂, Al₂O₃, TiO₂, BaTiO₃ and a mixture thereof.

Although there is no particular limitation in the size of the heat-absorbing inorganic particles, the inorganic particles preferably have a size of 0.001~10 *µ*m in order to form a separator having a uniform thickness and to provide an adequate porosity. If the size is less than 0.001 *µ*m, the inorganic particles have poor dispersibility so that the structure and physical properties of the organic/inorganic composite porous separator cannot be controlled with ease. If the size is greater than 10 *µ*m, the resultant organic/inorganic composite porous separator has an increased thickness under the same solid content, resulting in degradation in mechanical properties. Furthermore, such excessively large pores may increase a possibility of an internal short circuit being generated during repeated charge/discharge cycles.

### <Binder Polymer>

One component for forming or coating the separator according to the present invention is a binder polymer currently used in the art.

In the present invention, the binder polymer includes at least one selected from the group consisting of polyvinylidene fluoride-co-hexafluoropropylene, polyvinylidene fluoride-co-trichloroethylene, polymethylmethacrylate, polyacrylonitrile, polyvinyl pyrrolidone, polyvinyl acetate, polyethylene-co-vinyl acetate, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxymethyl cellulose, acrylonitrile-styrene-butadiene copolymer, polyimide, polyacarylonitrile-co-styrene, gelatine, and polyvinylidene fluoride

The binder polymers preferably have a glass transition temperature (T_{g}) as low as possible, more preferably T_{g} of between -200°C and 200°C, because they can improve mechanical properties such as flexibility and elasticity of a final coating layer.

When the binder polymer has ion conductivity, it can further improve the performance of an electrochemical device. Therefore, the binder polymer preferably has a dielectric constant as high as possible. In practice, because the dissociation degree of a salt in an electrolyte depends on the dielectric constant of a solvent used in the electrolyte, the polymer having a higher dielectric constant can increase the dissociation degree of a salt in the electrolyte used in the present invention. The dielectric constant of the polymer may range from 1.0 to 100 (as measured at a frequency of 1 kHz), and is preferably 10 or more.

Further, when using a binder polymer having a high degree of swelling with an electrolyte, the electrolyte can infiltrate into the polymer, and thus the binder polymer can impart electrolyte ion conductivity to the organic/inorganic composite porous separator or can improve the electrolyte ion conductivity. More particularly, the surface of the inorganic particles used according to the prior art serves as a resistance layer interrupting lithium ion movements. However, when a binder polymer has a high degree of swelling with an electrolyte on the surface of the porous inorganic particles and/or in the pores formed on the interstitial volumes among the inorganic particles, interfacial resistance occurring between the inorganic particles and the electrolyte decreases so that solvated lithium ions can be drawn and moved toward the inside of the pores. Such improved lithium ion conduction can activate electrochemical reactions in a battery and can improve the quality of a battery. In addition to the above, when the binder polymer is a polymer that can be gelled when swelled with an electrolyte, the polymer can react with an electrolyte injected subsequently into a battery, and thus can be gelled to form a gel type organic/inorganic composite electrolyte. Therefore, it is preferable to use a polymer having a solubility parameter of between 15 and 45 MPa^{1/2}, more preferably of between 15 and 25 MPa^{1/2}, and between 30 and 45 MPa^{1/2}. If the binder polymer has a solubility parameter of less than 15 Mpa^{1/2} or greater than 45 Mpa^{1/2}, it is difficult for the binder polymer to be swelled with a conventional liquid electrolyte for a battery.

### <Organic/Inorganic Composite Porous Separator>

The organic/inorganic composite porous separator comprising heat-absorbing particles according to the present invention may be present as a free-standing separator, or as a coating layer formed on a substrate and capable of functioning as a separator.

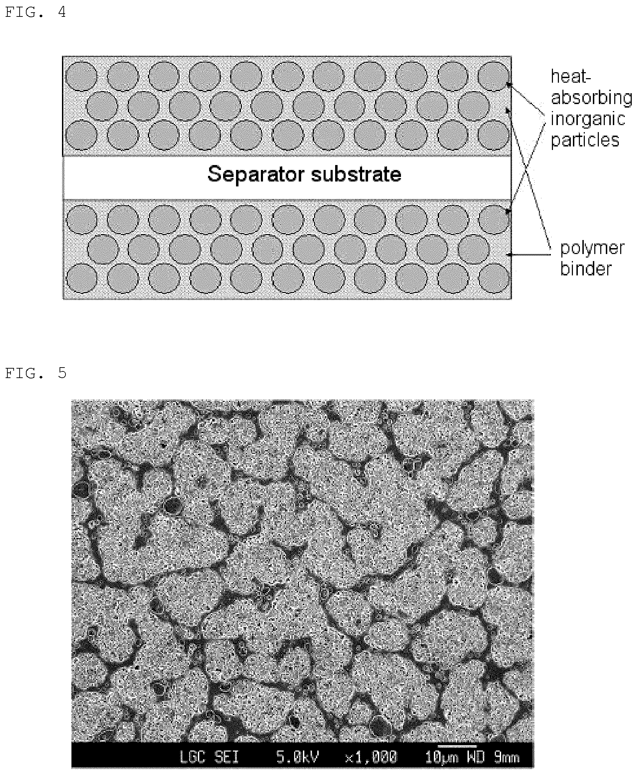

The organic/inorganic composite porous separator may have any one of the following three types of structures, but is not limited thereto.
In the present invention, the organic/inorganic composite porous separator is provided by coating a porous separator substrate having pores with the above mixture so as to form an organic/inorganic composite porous coating layer capable of functioning as a separator on the surface of the porous substrate and/or in the pores of the substrate (see FIG. 4).

In the organic/inorganic composite porous separator according to the present invention, there is no particular limitation in the substrate as long as the substrate is a porous separator substrate having pores. For example, the porous separator substrate may include a polyolefin-based separator currently used in the art or a heat resistant porous substrate having a melting point of 200°C or higher. Particularly, when using a heat resistant porous substrate, it is possible to prevent a separator from shrinking by external and/or internal heat application, and thus to ensure the thermal safety of the organic/inorganic composite porous separator.

Non-limiting examples of the porous separator substrate that may be used in the present invention include high density polyethylene, low density polyethylene, linear low density polyethylene, ultrahigh molecular weight polyethylene, polypropylene, polyethylene terephthalate, polybutylene terephthalate, polyester, polyacetal, polyamide, polycarbonate, polyimide, polyetheretherketone, polyethersulfone, polyphenylene oxide, polyphenylenesulfide, polyethylene naphthalene or combinations thereof. Also, other heat resistant engineering plastics may be used with no particular limitation.

Although there is no particular limitation in the thickness of the porous separator substrate, the substrate preferably has a thickness between 1 *µ*m and 100 *µ*m, more preferably between 5 *µ*m and 50 *µ*m. If the substrate has a thickness less than 1 *µ*m, it is difficult to maintain mechanical properties. If the substrate has a thickness greater than 100 *µ*m, it may function as a resistance layer.

Although there is no particular limitation in the pore size and porosity of the porous separator substrate, the substrate preferably has a porosity of between 5% and 95%. The pore size (diameter) preferably ranges from 0.01 *µ*m to 50 *µ*m, more preferably from 0.1 *µ*m to 20 *µ*m. When the pore size and porosity are less than 0.01 *µ*m and 5%, respectively, the substrate may function as a resistance layer. When the pore size and porosity are greater than 50 *µ*m and 95%, respectively, it is difficult to maintain mechanical properties.

Therefore, the organic/inorganic composite porous separator according to the present invention comprises a porous substrate having pores and an organic/inorganic composite porous coating layer formed on the surface or in the pores of the substrate by using a mixture of heat-absorbing inorganic particles and a binder polymer, wherein the heat-absorbing inorganic particles are interconnected among themselves and fixed by the binder polymer, and the interstitial volumes among the heat-absorbing inorganic particles form a pore structure.
The organic/inorganic composite porous separator that can be realized as described above is characterized by comprising a pore structure having a uniform pore size and porosity.

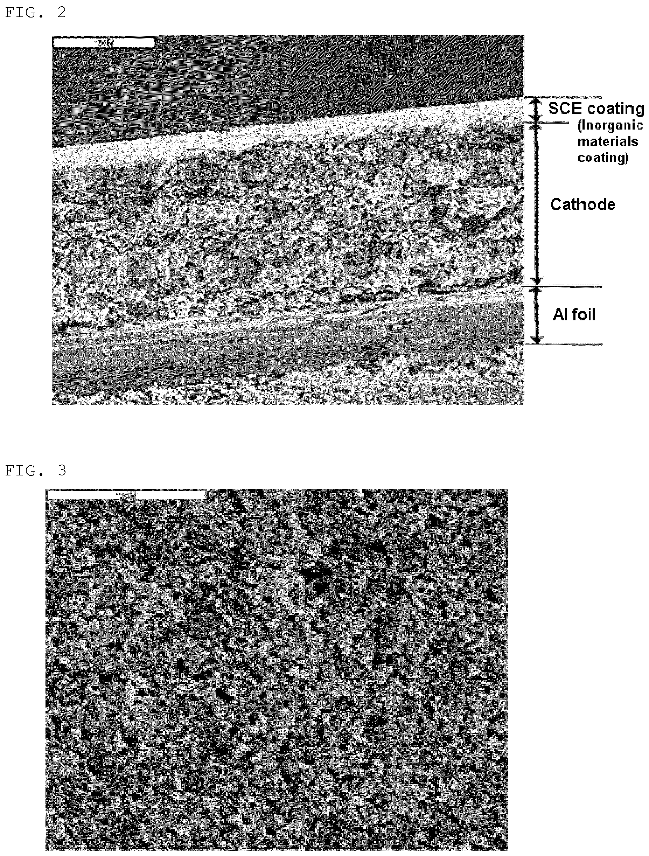

The organic/inorganic composite porous separator formed by coating the above mixture onto a porous substrate has pore structures not only in the porous substrate itself, but also in the coating layer due to the interstitial volumes among the inorganic particles formed on the substrate. Therefore, it is possible to significantly reduce interfacial resistance upon the injection of an electrolyte, to increase the space to be impregnated with an electrolyte by virtue of the pore structure having a uniform size, and to facilitate lithium ion conduction. As a result, the pore structure unique to the organic/inorganic composite porous separator according to the present invention can minimize degradation of the quality of a battery (see FIGs. 2 and 3 and Table 1).

In the organic/inorganic composite porous separators according to the above preferred embodiments of the present invention, the heat-absorbing inorganic particles are present preferably in a ratio of 10~99:1~90 (heat-absorbing particles : binder polymer, on the weight basis), more preferably in a ratio of 50~95: 5~50. If the content of the heat-absorbing inorganic particles is excessively low, the binder polymer is present in such a large amount that the interstitial volumes formed among the inorganic particles are decreased, and thus the pore size and porosity are reduced, resulting in degradation in the quality of a finished battery. If the content of the heat-absorbing inorganic particles is excessively high, the polymer content is too low to provide sufficient adhesion among the inorganic particles, resulting in degradation in mechanical properties of a finally formed organic/inorganic composite porous coating layer.

There is no particular limitation in the thickness of the organic/inorganic composite porous separator. Also, when the organic/inorganic composite porous separator is formed integrally on the surface of an electrode, it is possible to independently control the thickness of each separator on a cathode and on an anode. According to the present invention, it is preferable to control the thickness of the separator in a range of 1~100 *µ*m, more preferably of 1~30 *µ*m, in order to reduce the internal resistance of a battery.

Additionally, the organic/inorganic composite porous separator preferably has a pore size of 0.001~10 *µ*m and a porosity of 5~95%, but is not limited thereto.

The organic/inorganic composite porous separator according to the present invention may be obtained by using a conventional method known to those skilled in the art. In a preferred embodiment of the method, the heat-absorbing inorganic particles are added to and mixed with a polymer solution in which a binder is dissolved, and then the mixture is coated and dried on a substrate.

Herein, when a porous substrate having pores and a preliminarily formed electrode are used as the substrates, the organic/inorganic composite porous separators according to the present invention, respectively.

Also, as the solvent for dissolving the binder polymer, it is possible to use any solvent known to those skilled in the art with no particular limitation. A solvent having a solubility parameter similar to the solubility parameter of the binder polymer and a low boiling point is preferred.

It is preferable to perform a step of pulverizing inorganic particles after adding the heat-absorbing inorganic particles to the preformed binder polymer solution. Conventional pulverization methods, preferably a method using a ball mill, may be used.

According to the present invention, in order to control the pore size, porosity and thickness of an organic/inorganic composite porous coating layer to be formed finally, various factors for controlling pores of the coating layer, including pore size, porosity, dimension (particle diameter) and content of the porous inorganic particles and composition of the porous inorganic particles and the binder polymer, may be adjusted as necessary.

For example, as the weight ratio (I/P) of the heat-absorbing inorganic particles (I) to the polymer (P) increases, pore forming capability of the organic/inorganic composite porous coating layer increases due to an increase in interstitial volumes among the inorganic particles. Therefore, pore size and porosity increase in the finally formed organic/inorganic composite porous coating layer. On the other hand, the thickness of the organic/inorganic composite porous separator increases under the same solid content (weight of the inorganic particles + weight of the binder polymer). Additionally, as the size (particle diameter) of the inorganic particles increases, interstitial distance among the inorganic particles increases, thereby increasing the pore size.

The mixture of the heat-absorbing inorganic particles with the binder polymer obtained as described above is coated on a substrate by using any method known to one skilled in the art, including dip coating, die coating, roll coating, comma coating or combinations thereof. Then, the coating layer is dried to provide the organic/inorganic composite porous separator according to the present invention.

The organic/inorganic composite porous separator obtained as described above according to the present invention may be used as a separator for an electrochemical device, preferably a lithium secondary battery. In the organic/inorganic composite porous separator, the heat-absorbing inorganic particles included therein or coated thereon can inhibit the separator from shrinking or melting at high temperature.

### <Electrochemical Device>

Further, the present invention provides an electrochemical device comprising a cathode, an anode and an electrolyte, the electrochemical device comprising an electrode having the organic/inorganic composite porous separator, a separator comprising heat-absorbing inorganic particles introduced thereto, or both.

Such electrochemical devices include any devices in which electrochemical reactions occur, and particular examples thereof include all kinds of primary batteries, secondary batteries, fuel cells, solar cells or capacitors. Particularly, the electrochemical device is a lithium secondary battery including a lithium metal secondary battery, lithium ion secondary battery, lithium polymer secondary battery or lithium ion polymer secondary battery.

The electrochemical device may be manufactured by a conventional method known to one skilled in the art. In one embodiment of the method for manufacturing the electrochemical device, an electrode assembly having a cathode and an anode is formed and an electrolyte is injected into the electrode assembly. Herein, the above-described organic/inorganic composite porous separator may be interposed between both electrodes to provide the electrochemical device. Also, when using a monolithic composite electrode capable of functioning also as a separator by virtue of the organic/inorganic composite porous separator and, the electrochemical device is assembled by using a cathode and an anode. Therefore it is possible to simplify the process for manufacturing an electrochemical device.

There are no particular limitations in the cathode, anode and electrolyte that may be applied in combination with the organic/inorganic composite porous separator according to the present invention. Any cathodes, anodes and electrolytes generally used in conventional electrochemical devices may be used.

Also, the electrochemical device according to the present invention may further comprise a microporous separator, such as a polyolefin-based separator, in addition to the organic/inorganic composite porous separator according to the present invention.

### Best Mode for Carrying Out the Invention

Reference will now be made in detail to the preferred embodiments of the present invention.

### Example 1 (Reference Example)

### (Manufacture of anode)

To N-methyl-2-pyrrolidone (NMP) as a solvent, 96 wt% of carbon powder as an anode active material, 3 wt% of polyvinylidene fluoride (PVDF) as a binder and 1 wt% of carbon black as a conductive agent were added to form mixed slurry for an anode. The slurry was coated on Cu foil having a thickness of about 10 *µ*m as an anode collector, and then dried to form an anode. Then, the anode was subjected to roll press.

### (Manufacture of cathode)

To N-methyl-2-pyrrolidone (NMP) as a solvent, 92 wt% of lithium cobalt composite oxide (LiCoO₂) as a cathode active material, 4 wt% of carbon black as a conductive agent and 4 wt% of PVDF as a binder were added to form slurry for a cathode. The slurry was coated on Al foil having a thickness of about 20 *µ*m as a cathode collector, and then dried to form a cathode. Then, the cathode was subjected to roll press.

### (Electrode Surface Coating)

About 5 wt% of PVdF-CTFE polymer (polyvinylidene fluoride-chlorotrifluoroethylene copolymer) having a solubility parameter of 20~25 MPa^{1/2} or PVdF-HFP (polyvinylidene fluoride-hexfluoropropylene) polymer having a solubility parameter of 22~30 MPa^{1/2} was added to acetone and dissolved therein at 50°C for about 12 hours or more to provide a polymer solution. To the preformed polymer solution, aluminum hydroxide (Al(OH)₃) powder was added in an amount of 20 wt% on the solid content basis, and the aluminum hydroxide powder was pulverized and dispersed by using a ball mill for 12 hours or more to provide slurry. In the slurry, particle diameter of the aluminum hydroxide particles may be controlled according to the size (particle size) of the beads and the ball milling time. In this example, the aluminum hydroxide particles are pulverized into a size of about 800 nm to provide slurry. Then, the slurry was coated onto surfaces of the preliminarily formed cathode and anode to a thickness of about 15 *µ*m via a dip coating process. After calculating average pore size and porosity of the resultant organic/inorganic composite porous coating layer from the SEM photograph as shown in FIG. 3, the coating layer has an average pore size and porosity of 0.3 *µ*m and 45%, respectively.

The anode and the cathode obtained as described above were stacked to provide an electrode assembly using no conventional polyolefin-based separator. Then, an electrolyte comprising 1M lithium hexafluorophosphate (LiPF₆) in ethylene carbonate (EC), propylene carbonate (PC) and diethyl carbonate (DEC) in a weight ratio of 30/20/50 (EC/PC/DEC) was injected thereto to provide a lithium secondary battery.

### Example 2 (Reference Example)

Example 1 was repeated to provide an organic/inorganic composite porous separator and a battery including the same, except that a mixture of the polymer and aluminum hydroxide (Al(OH)₃) powder was coated onto a polyethylene separator having a thickness of about 18 *µ*m (porosity 45%) instead of the preliminarily formed electrode.

After measuring the average pore size and porosity by using a porosimeter, the organic/inorganic composite porous separator had an average pore size of 0.4 *µ*m and a porosity of 55%. FIG. 4 shows the structure of the organic/inorganic composite porous separator.

### Example 3 (Reference Example)

Example 1 was repeated to provide an organic/inorganic composite porous separator and a battery including the same, except that a mixture of the polymer and aluminum hydroxide (Al(OH)₃) powder was coated onto a teflon sheet substrate instead of the preliminarily formed electrode, the solvent was dried, and then the teflon sheet was removed.

### Comparative Example 1

Example 1 was repeated to provide a lithium secondary battery, except that a conventional polyethylene (PE) separator known to those skilled in the art was used.

### Comparative Example 2

Example 1 was repeated to provide an electrode and a lithium secondary battery including the same electrode, except that alumina (Al₂O₃) particles as non-heat absorbing inorganic particles were used instead of aluminum hydroxide (Al(OH)₃) particles.

### Experimental Example 1: Surface Analysis of Organic/Inorganic Composite Porous Separator (Reference Example)

The following test was performed to analyze the surface of the organic/inorganic composite porous separator according to the present invention.

The sample used in this test was the organic/inorganic composite porous separators comprising heat-absorbing inorganic particles (Al(OH)₃) according to Examples 1 and 2.

When analyzed by using a Scanning Electron Microscope (SEM), the organic/inorganic composite porous separator according to Example 1 showed uniform pore structures formed in the electrode substrate itself (see FIG. 2) as well as in the organic/inorganic composite porous coating layer using the heat-absorbing inorganic particles (see FIG. 3). Similarly, the organic/inorganic composite porous separator according to Example 2 showed a uniform pore structure formed in the organic/inorganic composite porous coating layer using the heat-absorbing inorganic particles (see FIG. 5).

### Experimental Example 2: Evaluation for Safety of Lithium Secondary Battery (Reference Example)

The following test was performed to evaluate the safety of a lithium secondary battery comprising the organic/inorganic composite porous separator according to the present invention.

### 2-1. Nail Penetration Test

The lithium secondary battery including the organic/inorganic composite porous separator comprising heat-absorbing inorganic particles according to Example 1 was used as a sample. As controls, the lithium secondary batteries using the polyolefin-based separator according to Comparative Example 1 and the organic/inorganic composite porous separator comprising conventional non-heat absorbing inorganic particles according to Comparative Example 2 were used. The batteries were subjected to the following nail penetration test.

The nail penetration test is a test for observing whether a battery causes ignition and explosion or not, after an artificial internal short circuit is generated by causing a sharp needle-like object to penetrate into the battery at a constant speed so that a cathode and an anode are in direct contact with each other.

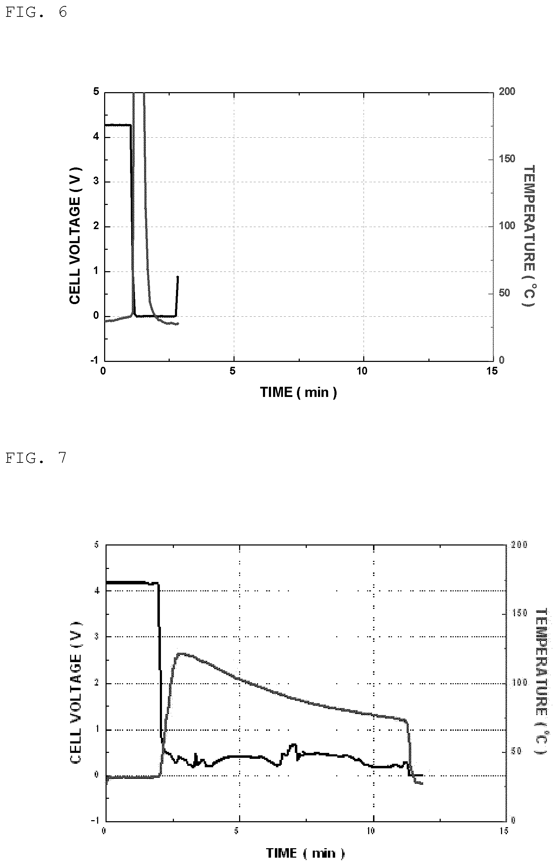

After the test, the battery using the polyolefin-based separator according to Comparative Example 1 showed a rapid drop in voltage to 0 due to the generation of an internal short circuit in the battery and ignited due to an increase in internal temperature of the battery (see FIG. 6). Additionally, the battery using the organic/inorganic composite porous separator comprising non-heat absorbing inorganic particles according to Comparative Example 2 did not ignite, but showed an increase in surface temperature to 125°C (see FIG. 7). Such an excessive increase in temperature of a battery significantly increases a possibility of ignition or explosion with time.

On the contrary, the battery using the organic/inorganic composite porous separator comprising heat absorbing inorganic particles according to Example 1 did not ignite and showed an increase in surface temperature merely to 100°C. This indicates that use of the heat-absorbing inorganic particles ensures the safety of a battery (see FIG. 8).

### 2-2. Hot Box Test

Each battery was stored at a high temperature of 150°C for 1 hour. Then, the condition of each battery was observed.

After the test, the battery using a conventional polyolefin-based separator according to Comparative Example 1 showed severe heat shrinking and molten and broken after storing it at a temperature of 150°C for 1 hour. Contrary to this, the organic/inorganic composite porous separator comprising heat-absorbing inorganic particles according to Example 2 experienced no change even after storing it at a high temperature of 150°C, and showed excellent thermal stability (see FIG. 9).

### Experimental Example 3: Evaluation for quality of lithium secondary battery (Reference Example)

The following test was performed in order to evaluate C-rate characteristics of the lithium secondary battery comprising the organic/inorganic composite porous separator according to the present invention.

The lithium secondary battery using the organic/inorganic composite porous separator comprising heat-absorbing particles according to Example 1, the lithium secondary battery using the polyolefin-based separator according to Comparative Example 1 and the lithium secondary battery using the organic/inorganic composite porous separator according to Comparative Example 2 were used in this test. Each battery having a capacity of 2.4 Ah was subjected to cycling at a discharge rate of 0.2C, 0.5C, 1C, 1.5C and 2C. The following Table 1 shows the discharge capacity of each battery, the capacity being expressed on the basis of C-rate characteristics.

After the test, it can be seen that the lithium secondary battery using the organic/inorganic composite porous separator comprising heat-absorbing inorganic particles according to Example 1 is comparable to the battery using the conventional polyolefin-based separator in terms of C-rate characteristics under a discharge rate up to 2C (see Table 1).

**[Table 1]**

| | Capacity | 0.2C | 0.5C | 1.0C | 1.5C | 2.0C |
|---|---|---|---|---|---|---|
| Comp. Ex. 1 | mAh | 2408 | 2377 | 2320 | 2293 | 2240 |
| | % | 100.0% | 98.7% | 96.3% | 95.2% | 93.0% |
| Comp. Ex. 2 | mAh | 2406 | 2373 | 2316 | 2279 | 2224 |
| | % | 100.0% | 98.6% | 96.3% | 94.7% | 92.5% |
| Ex. 1 | mAh | 2410 | 2372 | 2325 | 2295 | 2243 |
| | % | 100.0% | 98.4% | 96.5% | 95.2% | 93.1% |

### Industrial Applicability

As can be seen from the foregoing, the organic/inorganic composite porous separator, using heat-absorbing inorganic particles that absorb or consume heat energy generated in an electrochemical device as a component for forming or coating the separator, consumes heat energy generated upon rapid heating caused by external or internal factors, and thus can ensure excellent thermal safety of the electrochemical device.

## Claims

1. A separator for a lithium secondary battery comprising a porous substrate and an organic/inorganic composite porous coating layer on the surface, in the pore, or on the surface and in the pore of the substrate,
wherein the organic/inorganic composite porous coating layer comprises:
heat-absorbing inorganic particles,
a binder polymer, and
inorganic particles having a dielectric constant of 5 or more, which include at least one selected from the group consisting of SrTiO₃, SnO₂, CeO₂, MgO, NiO, ZnO, Y₂O₃, ZrO₂, Al₂O₃, TiO₂, and BaTiO₃,
wherein the heat-absorbing inorganic particle is at least one particle selected from the group consisting of antimony trioxide (Sb₂O₃), antimony tetraoxide (Sb₂O₄), antimony pentaoxide (Sb₂O₅), aluminum hydroxide (Al(OH)₃), magnesium hydroxide (Mg(OH)₂), H₃BO₃, HBO₂, ZnSnO₄, ZnSnO₃, and ZnSn(OH)₆, and
the binder polymer includes at least one selected from the group consisting of polyvinylidene fluoride-co-hexafluoropropylene, polyvinylidene fluoride-co-trichloroethylene, polymethylmethacrylate, polyacrylonitrile, polyvinyl pyrrolidone, polyvinyl acetate, polyethylene-co-vinyl acetate, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxymethyl cellulose, acrylonitrile-styrene-butadiene copolymer, , polyacarylonitrile-co-styrene, gelatine, and polyvinylidene fluoride.

2. The separator as claimed in claim 1, wherein the heat-absorbing inorganic particles is at least one selected from the group consisting of aluminum hydroxide (Al(OH)₃), magnesium hydroxide (Mg(OH)₂), H₃BO₃, and HBO₂.

3. The separator as claimed in claim 1, wherein the organic/inorganic composite porous coating layer further includes at least one selected from the group consisting of inorganic flame-resistant materials and organic flame resistant materials.

4. The separator as claimed in claim 1, wherein the heat-absorbing inorganic particles and the binder polymer are used in a weight ratio of 50:50-95:5.

5. A lithium secondary battery comprising:
a cathode,
an anode,
the separator as defined in any one of claims 1 to 4, and
an electrolyte.

6. Use of the separator as defined in any one of claims 1-4 as a separator in a lithium secondary battery for improving the safety of the lithium secondary battery.

## Patentansprüche

1. Separator für eine Lithium-Sekundärbatterie, umfassend ein poröses Substrat und eine poröse organische/anorganische Verbundmaterial-Beschichtungsschicht auf der Oberfläche, in der Pore oder auf der Oberfläche und in der Pore des Substrats,
wobei die poröse organische/anorganische Verbundmaterial-Beschichtungsschicht umfasst:
wärmeabsorbierende anorganische Partikel,
ein Bindemittelpolymer, und
anorganische Partikel mit einer Dielektrizitätskonstante von 5 oder mehr, die mindestens eines, ausgewählt aus der Gruppe, bestehend aus SrTiO₃, SnO₂, CeO₂, MgO, NiO, ZnO, Y₂O₃, ZrO₂, Al₂O₃, TiO₂ und BaTiO₃, enthalten,
wobei das wärmeabsorbierende anorganische Partikel mindestens ein Partikel ist, das aus der Gruppe ausgewählt ist, die aus Antimontrioxid (Sb₂O₃), Antimontetroxid (Sb₂O₄), Antimonpentoxid (Sb₂O₅), Aluminiumhydroxid (Al(OH)₃), Magnesiumhydroxid (Mg(OH)₂), H₃BO₃, HBO₂, ZnSnO₄, ZnSnO₃ und ZnSn(OH)₆ besteht, und
das Bindemittelpolymer mindestens eines, ausgewählt aus der Gruppe, bestehend aus Polyvinylidenfluorid-co-Hexafluorpropylen, Polyvinylidenfluorid-co-Trichlorethylen, Polymethylmethacrylat, Polyacrylnitril, Polyvinylpyrrolidon, Polyvinylacetat, Polyethylen-co-Vinylacetat, Celluloseacetat, Celluloseacetatbutyrat, Celluloseacetatpropionat, Cyanoethylpullulan, Cyanoethylpolyvinylalkohol, Cyanoethylcellulose, Cyanoethylsaccharose, Pullulan, Carboxymethylcellulose, Acrylnitril-Styrol-Butadien-Copolymer, Polyacrylnitrilco-Styrol, Gelatine und Polyvinylidenfluorid, enthält.

2. Separator, wie in Anspruch 1 beansprucht, wobei die wärmeabsorbierenden anorganischen Partikel mindestens eines, ausgewählt aus der Gruppe, bestehend aus Aluminiumhydroxid (Al(OH)₃), Magnesiumhydroxid (Mg(OH)₂), H₃BO₃ und HBO₂, sind.

3. Separator, wie in Anspruch 1 beansprucht, wobei die poröse organische/anorganische Verbundmaterial-Beschichtungsschicht ferner mindestens eines, ausgewählt aus der Gruppe, bestehend aus anorganischen flammhemmenden Materialien und organischen flammhemmenden Materialien, enthält.

4. Separator, wie in Anspruch 1 beansprucht, wobei die wärmeabsorbierenden anorganischen Partikel und das Bindemittelpolymer in einem Gewichtsverhältnis von 50:50 bis 95:5 verwendet werden.

5. Lithium-Sekundärbatterie, umfassend:
eine Kathode,
eine Anode,
den Separator, wie in einem der Ansprüche 1 bis 4 definiert, und
einen Elektrolyten.

6. Verwendung des Separators, wie in einem der Ansprüche 1-4 definiert, als Separator in einer Lithium-Sekundärbatterie zur Verbesserung der Sicherheit der Lithium-Sekundärbatterie.

## Revendications

1. Séparateur pour une batterie secondaire au lithium comprenant un substrat poreux et une couche de revêtement composite organique/inorganique poreux sur la surface, dans les pores, ou sur la surface et dans les pores du substrat,
dans lequel la couche de revêtement composite organique/inorganique poreux comprend :
des particules inorganiques absorbant la chaleur,
un polymère liant, et
des particules inorganiques ayant une constante diélectrique de 5 ou plus, qui incluent au moins un composé sélectionné dans le groupe constitué de SrTiO₃, SnO₂, CeO₂, MgO, NiO, ZnO, Y₂O₃, ZrO₂, Al₂O₃, TiO₂, et BaTiO₃,
dans lequel la particule inorganique absorbant la chaleur est au moins une particule sélectionnée dans le groupe constitué du trioxyde d'antimoine (Sb₂O₃), du tétraoxyde d'antimoine (Sb₂O₄), du pentoxyde d'antimoine (Sb₂O₅), de l'hydroxyde d'aluminium (Al (OH)₃), de l'hydroxyde de magnésium (Mg(OH₂), H₃BO₃, HBO₂, ZnSnO₄, ZnSnO₃, et ZnSn(OH)₆, et
le polymère liant inclut au moins un polymère sélectionné dans le groupe constitué du polyfluorure de vinylidène-co-hexafluoropropylène, polyfluorure de vinylidène-co- trichloroéthylène, polyméthacrylate de méthyle, polyacrylonitrile, polyvinylpyrrolidone, polyacétate de vinyle, polyéthylène-co-acétate de vinyle, acétate de cellulose, butyrate d'acétate de cellulose, propionate d'acétate de cellulose, pullulane cyanoéthylique, alcool polyvinylique cyanoéthylique, cellulose cyanoéthylique, saccharose cyanoéthylique, pullulane, carboxyméthylcellulose, copolymère d'acrylonitrile-styrène-butadiène, polyacrylonitrile-co-styrène, gélatine et fluorure de polyvinylidène.

2. Séparateur selon la revendication 1, dans lequel les particules inorganiques absorbant la chaleur sont des particules dont au moins une particule est sélectionnée dans le groupe constitué de l'hydroxyde d'aluminium (Al(OH)₃), l'hydroxyde de magnésium (Mg(OH)₂), H₃BO₃, et HBO₂.

3. Séparateur selon la revendication 1, dans lequel la couche de revêtement composite organique/inorganique poreux inclut en outre au moins un matériau sélectionné dans le groupe constitué de matériaux inorganiques résistants à la flamme et de matériaux organiques résistants à la flamme.

4. Séparateur selon la revendication 1, dans lequel les particules inorganiques absorbant la chaleur et le polymère liant sont utilisés selon un rapport en poids de 50:50-95:5.

5. Batterie secondaire au lithium comprenant :
une cathode,
une anode,
le séparateur tel que défini dans l'une quelconque des revendications 1 à 4, et
un électrolyte.

6. Utilisation du séparateur tel que défini dans l'une quelconque des revendications 1 à 4 comme séparateur dans une batterie secondaire au lithium pour améliorer la sécurité de la batterie secondaire au lithium.
